# EUROPEAN PATENT SPECIFICATION

(11) **EP 3 761 802 B1**
(45) Date of publication and mention of the grant of the patent: **16.04.2025**
(21) Application number: 19722184.9
(22) Date of filing: 06.03.2019
(51) Int. Cl.: A23K 10/16, A23J 1/00, A23J 3/20, A23J 3/34, A23K 50/80

(54) **METHOD FOR OBTAINING PROTEINS OR A RICH-PROTEIN EXTRACT FROM ALGAE, EXTRACTS AND USES THEREFORE**
VERFAHREN ZUR GEWINNUNG VON PROTEINEN ODER EINES PROTEINREICHEN EXTRAKTS AUS ALGEN, EXTRAKTE UND VERWENDUNGEN DAFÜR
PROCÉDÉ D'OBTENTION DE PROTÉINES OU D'UN EXTRAIT RICHE EN PROTÉINES À PARTIR D'ALGUES, EXTRAITS ET UTILISATIONS

(30) Priority: 06.03.2018 PT 2018110611
(43) Date of publication of application: 13.01.2021
(73) Proprietor: CIIMAR - Centro Interdisciplinar de Investigação Marinha e Ambiental, 4450-208 Matosinhos (PT); Universidade Do Porto, 4099-002 Porto (PT); Universidade Católica Portuguesa - UCP, 4169-005 Porto (PT); New Enzymes, LDA, 4425-626 Maia (PT)
(72) Inventor: PINHEIRO VALENTE, Luisa Maria, 4050-313 PORTO (PT); ESTEVEZ PINTADO, Maria Manuela, 4202-401 PORTO (PT); GOMES BATISTA, Sónia Maria, 4450-208 MATOSINHOS (PT); MAGALHÃES FUTURO DA SILVA, Aurora, 4200-465 PORTO (PT); ABREU FARIA, Jorge João, 4425-626 MAIA (PT)
(74) Representative: Patentree
(86) International application number: PCT/IB2019/051811
(87) International publication number: WO 2019/171293

(56) References cited:
- EP-A1- 2 985 082
- US-A- 4 906 479
- US-A- 4 931 291
- US-A- 5 330 913

## Description

### Technical field

The present disclosure relates to disrupting algae cell walls, in order to obtain protoplast with high nutrient digestibility for use as a food ingredient and/or as feed for farmed fish and shellfish species, which leads to the production of added value sea food items and to more sustainable and better performing food chains.

Research effort will be focused on economically important and well-established shellfish (Pacific oyster, *Crassostrea gigas*) and finfish species (European seabass, *Dicentrarchus labrax* and Atlantic salmon, *Salmo solar*) that play a major role in European aquaculture sector. The project comprises the development of functional diets for producing high valued fish and shellfish following nutritional strategies, like the supplementation of diets with algae or algae extracts.

### Background Art

Document US5330913 discloses, an aqueous suspension of *Chlorella* cells is disrupted by the rapid pressure changes created by a rotating impeller within a small, cylindrical, tight-sealed container with rigid spheres having a constant diameter of 500 to 800 microns.

Document US4931291 discloses, the use of various microalgal cell rupture methods to produce feed for crustacean and shellfish larvae. The disruption of cell walls is carried out by spray dry treatment, ultrasonic treatment, triturating treatment, treatment with an enzyme for the lysis of cell walls and other treatments. For all the treatments, the wet cells were used, obtained by washing several times unicellular algae's after cultivation.

Navarro, E. Forján, M. Vázquez, Z. Montero, E. Bermejo, M.Á. Castaño, A. Toimil, E. Chagüaceda, M.Á. Garcia-Sevillano, M. Sánchez, M.J. Dominguez, R. Pásaro, I. Garbayo, C. Vilchez, J.M. Vega, Microalgae as a safe food source for animals: nutritional characteristics of the acidophilic microalga Coccomyxa onubensis, Food & Nutrition Research 60 (2016) 10.3402/fnr.v60.30472: Dried algae biomass was converted into a powder of grain size using a vibratory disc mill (Retsch GmbH RS100, Haan, Germany).

P.R. Postma, T.L. Miron, G. Olivieri, M.J. Barbosa, R.H. Wijffels, M.H.M. Eppink, Mild disintegration of the green microalgae Chlorella vulgaris using bead milling, Bioresource Technology 184 (2015) 297-304: A Dyno-Mill Research Lab (RL) from Willy A. Bachofen AG Maschinenfabrik, Muttenz, Switzerland was used for disintegration experiments. The aim of this work was to set the bead mill as a benchmark for mild disintegration technologies. This is achieved by evaluating the effect of biomass concentration and agitator speed during bead milling on water soluble protein extractability from *C*. *vulgaris.*

J. Fleurence, L. Massiani, O. Guyader, S. Mabeau, use of enzymatic cell wall degradation for improvement of protein extraction from Chondrus crispus, Gracilaria verrucosa and Palmaria palmata, Journal of Applied Phycology 7(4) (1995) 393: Application of carrageenase and cellulase activities on *Chondrus crispus* led to a 10- fold increase in extraction efficiency of the proteins. For *Gracilaria verrucosa,* the coupled use of agarase and cellulase led to a 3-fold increase in protein yield. In contrast, the application of xylanase and cellulase to *Palmaria palmata* gave a protein yield similar to the control (extraction without enzymes).

J. Fleurence, C. Le Coeur, S. Mabeau, M. Maurice, A. Landrein, Comparison of different extractive procedures for proteins from the edible seaweeds Ulva rigida and Ulva rotundata, Journal of Applied Phycology 7(6) (1995) 577-582: The study showed the great efficiency of a commercial enzymatic preparation, including cellulases, hemicellulases and β-glucanases, to increase the protein solubilisation from the edible seaweeds *Ulva rigida* and *Ulva rotundata.* EP 2 985 082 discloses the concentrating of microalgal biomass by grinding followed by adsorptive bubble separation.

These facts are disclosed, in order to illustrate the technical problem addressed by the present disclosure.

### General Description

Global population growth and increase in living standards will push up the demand for fish-derived protein in the future. However, resource scarcity (feed, water and energy), environmental impacts, and changes in climate and growing conditions can seriously hamper aquaculture that supplies a significant proportion of human food.

New sustainable protein and lipid sources and improved technologies to increase bio-availability of existing sources will be needed to ensure adequate supply of aquafeeds to ensure growth of aquaculture. On the other hand, the growth of the industry has caused environmental concerns. Interestingly, aquaculture effluents can be an excellent medium to improve algal growth and nutritional value; algae remove organic compounds and minerals from fish farm effluents, producing high value products for aquafeeds while recycling nutrients; thus, improving the water body quality and reducing the environmental impact.

An object of the present disclosure relates to target the development of strategies to increase efficiency of important European farmed species (namely aquatic species, in particular Pacific oyster, European sea bass and Atlantic salmon ) and reduce the environmental impact using micro- and macro-algal biomass as feed ingredients by: culturing marine algae under optimized technological processes to produce high value products for aquafeeds while recycling nutrients; identifying novel processing technologies for algae biomass and feed additives to improve fish digestive capacity and nutrient metabolism upon using the selected algae; and improving fish growth and end product quality, reducing time to slaughter and providing a safe and healthy food item with wide consumer acceptance.

Furthermore, it is also an object of the present disclosure to tackle the sustainability challenges of the aquafeed industry by developing cost-effective and resource-efficient alternatives to the traditional protein (fish meal, FM) and lipid sources (fish oil, FO) by providing: a) efficient new processes to valorise selected algae that could reduce EU imports of protein and lipid sources and minimize over-exploitation of wild fish stocks, loss of biodiversity and environmental burden and b) high sensory quality, acceptable fish products that meet food safety standards and dietary needs for a healthy life. Therefore, cost-efficient and environmentally sustainable production and processing technologies to produce algal biomass suitable for inclusion in aquafeeds are objects of the present disclosure.

Furthermore, it is also an object of the present disclosure to provide a method for efficiently disrupting the algae cell walls based on milling disruption, followed by enzymatic lysis. The present disclosure results in a disrupted algal suspension with a high level of "free" protein, peptides and amino acids and other valuable soluble nutrients and bioactives compounds entrapped in cell membranes (minerals, vitamins, lipids, antioxidants, etc), comparing with the same no disrupted alga, able to be dried and be more efficiently used as feed/food ingredient for animals or humans.

In the present disclosure, "free" protein, peptides or amino acids means water soluble protein, peptides or amino acids.

In the present disclosure, aquafeeds means any feed for aquatic organisms produced in aquaculture.

The entire algae (macro and microalgae) are already marketed for human consumption at very high prices. Algae are natural nutrient sources, rich in protein, bioactive compounds, and in the case of microalgae the main producers of long-chain omega-3 fatty acids in the food chain. Algae production surplus and/or low prices product are also already being used for animal nutrition, both in ruminants and monogastric animals. As such, algae have been found also to be a valuable food for farmed fish, where the fish meal and fish oil are no longer sustainable, and costs steadily increase. Thus, the feed and food industry sector are seriously considering alternative sources of protein and lipid. Algae biomass is a natural and rich nutrient source, being increasingly produced at large scale with decreasing production costs. When algal meal came onto the market at an affordable price, the animal feed industry would certainly consider using it based on existing evidence of the nutritional value of algal biomass.

The use of algae as protein source in aquafeeds, especially when used in small amounts in fish feed, in particular <10% of the diet, results in several positive effects, such as increased fish weight, increased deposition of minerals like iodine in the muscle, and defense against cellular stress.

Algae can be a complementary source of food proteins for human and animal nutrition. Their amino acid content is of nutritional interest but a general reduction in nutrients digestibility *in vivo* with increasing inclusion levels of algae biomass is reported due to the resistance of its cell wall.

Biotechnological treatments of algae could be attempted to improve protein digestibility and, therefore, increase the nutritional value of these proteins. To efficiently utilize algae as a food and feed ingredient, its cell wall needs to be disrupted to increase its digestion and nutrient absorption rate.

A variety of disruption methods are available to disintegrate strong cellular walls and membranes and liberate the cell contents, but only some, mainly mechanical, cell disruption methods have found industrial application. Although the cell wall may be disrupted by milling, disruption efficiency achieved could be limited. The present invention has been accomplished based on the findings that the above-mentioned problems are solved by applying various cell wall-disrupting treatments to algae before incorporating them in aquafeeds.

Alga cell rupture can be achieved by several methods which can be classified as chemical, physical or mechanical methods. The chemical methods include enzymatic digestion, detergent solubilisation, lipid dissolution with a solvent, and alkali treatment. The physical methods include osmotic shock, decompression, sonication, heat treatment, and freeze-thawing. The mechanical methods include grinding, high shear homogenization and pressure extrusion. From all the mentioned methods, the mechanical method is the most plausible to industrial application.
Algae cell wall disruption is currently achieved by mechanical rupture method wherein vibratory grinding technologies are employed in the presence of balls as abrasive grinding media. These balls deform by wear, gradually, decreasing the mill efficiency and increasing the grinding costs. The use of balls as abrasive grinding media has the disadvantage of being based on the gravity force generated by falling balls impacting the material to be ground, resulting in lower and less frequent impacts on the material, translated in limited effectiveness for breaking cell walls in algae biomass.

In the present disclosure, it is proposed as grinding apparatus, a vibratory mill using a vessel composed by a bowl with a lid and one solid dense puck and one ring used as grinding media that intimately contact with the wet algae, generating disrupted algal suspension.

In addition, and to ensure the maximal possible amount of "free" protein in the algae biomass, it is proposed to associate to this mechanical disruption an enzymatic lysis using a cocktail of enzymes. In this context, it is proposed to use a non-expensive enzymatic mixture, in particular a mixture of lipase, pectinase, cellulase and amylase, after the milling in order to obtain a good amount of protoplast production.

Lipase is the primary digestant used to break fats into fatty acids and glycerol. Pectinase is an enzyme that breaks down the polysaccharide pectin.

Cellulase is an enzyme that catalyze cellulolysis, the decomposition of cellulose and of some related polysaccharides.

Amylase is an enzyme that catalyses the hydrolysis of starch into sugars.

The cellulosic cell wall, which represents about 10% of the algal dry matter, poses a serious problem in digesting/utilizing the algal biomass, since it is not digestible for humans and other non-ruminants like fish [1]. Hence, effective treatments are necessary to disrupt the cell wall to make the protein and other constituents accessible for digestive enzymes.

A possible means of increasing the nutritional value of algal biomass would be to break down the cell wall fragments by mechanical treatment or even removal of most of the fibre, although such additional processing steps may be too expensive [2]. It is in this context that the unit operation of algae cell wall disruption for intracellular product isolation is of increasing importance. By rupturing the algae cell wall, proteins, lipids and other naturally hydrophobic components are released from the cell.

Vibratory mills have the advantage of generating much higher impact or grinding forces than ball mills or other similar mills which are based on the gravity force generated by falling balls or rods impacting the material to be ground. Vibratory mills are not limited by gravity and much greater impact forces can be generated by the rapid vibration of a motor-driven grinding chamber. Much larger and more frequent impacts on the material translate into faster and finer grinding. Because of the high efficiency of cell rupture, the size of the equipment needed to process a feed dispersion is much smaller than a system utilizing a motor-driven rotor.

However, production of heat due to impacts and friction between the grinding elements is a general problem in agitated mills [3], requiring a cooled structure and cooled grid elements. In an investigation [4] it was found that increasing temperature reduced the measured protein release, apparently due to thermal denaturation and/or modification of physical properties such as suspension viscosity (reduced viscosity at higher temperatures would lead to greater backmixing).

An aspect of the present disclosure relates to a method for obtaining proteins or a rich-protein extract from algae, comprising the steps of: disrupting a cell wall of algae by physical-mechanical means using a vibratory grinding mill with rings; submitting the disrupted algae to an enzymatic hydrolysis carried out with a mixture of enzymes; wherein the enzyme mixture is a mixture of at least two enzymes selected from the following list: lipase, pectinase, cellulase, hemicellullase, endo exo-arabanase, amylase, or mixtures thereof; provided that at least one of the enzymes is lipase, pectinase, amylase.

The algae are microalgae or a macroalgae.

In an embodiment for better results, the enzyme misture is a pectinase, an endo exo-arabanase, a hemicellulase and a cellulase; a cellulase and a pectinase; a lipase, a pectinase, a cellulase and an amylase. Preferably, wherein the enzyme mixture is a cellulase and a pectinase.

In an embodiment for better results, the algae may be selected from *Ulva* sp., *Gracilaria* sp., *Nannochloropsis* sp., *Tetraselmis* sp., or mixtures thereof.

In an embodiment, the step of disrupting the cell wall by physical-mechanical means is carried out for 30 seconds - 10 minutes, preferably between 1 minute - 5 minutes.

In an embodiment for better results, the step of submitting the disrupted algae or microalgae to the enzymatic hydrolysis is carried out for 30 minutes - 5 hours, preferably between 2 hours - 4 hours, more preferably 3 hours.

In an embodiment for better results, enzymatic hydrolysis is performed at a temperature between 35 - 85 °C, in particular between 50-60 °C.

In an embodiment for better results, enzymatic hydrolysis is performed at a pH between 5.5 - 9.5, in particular between 6-7.

In an embodiment for better results, the method further comprises a step of separation or purification.

An aspect of the present disclosure (not part of the claimed invention) relates to the algae extract obtainable by the method described in the present disclosure for use as feed for aquatic organisms wherein at least 50% of the cell wall of algae was destructed, or preferentially at least 75% of the cell wall of algae was destructed.

An aspect of the present disclosure (not part of the claimed invention) relates to an aquaculture feed comprising the extract of the present subject-matter, in particular for fish and shellfish species.

Use of the extract as an improver of protein availability for feed for aquatic organisms, in particular, for fish and shellfish species, and/or as a food ingredient (not part of the claimed invention).

In an embodiment, the chamber of the vibratory mill can be of any shape and can be of any construction. Suitable materials of construction include poly (vinyl chloride) - PVC, high density polyethylene - HDPE, steel, other metals, glass, ceramics, etc. In addition, the chamber can be lined with replaceable wear resistant materials such as, but not limited to, HDPE, ceramic, steel or rubber.

In an embodiment, there are many parameters for control to obtain a precise grinding. Cell concentration, bead or rings diameter and bead loading in the grinding chamber of the mill are factors which affect disruption rate. Increased bead loading up to 80% enhances the rate of disruption [3, 5, 6].

The vibratory grinding mill can be operated in batch or continuous mode although continuous operation is preferred. The rupture of cells is a function of the probability of cells being impacted by the grinding media, and this is a function of the amount and size of the grinding media and the residence time that the cells are in the mill. For a continuous operation, the residence time in the vibratory grinding mill can be varied by controlling the feed rate into the mill and the volume of the chamber. If it is operated in batch mode, the residence time is a function of the operating time for a batch.

Furthermore, it was observed that the use of vibratory grinding systems with algae resulted in ruptured algae instead of total disintegration algae by using equipment that was designed to grind solid ore particles.

In an embodiment, suitable large vibratory grinding mills and their manufacturers include SIEBTECHNIK TS250 Vibratory Disc Mill, Vibratory Disc Mill, 1.000 rpm, voltage 220 V / 0,72 KW, from SIEBTECHNIK Germany; Vibrating Cup Mill PULVERISETTE 9 from FRITSCH, Germany; or Vibratory Kinetic Energy Mill from Micro Grinding Systems, Little Rock, Ark.

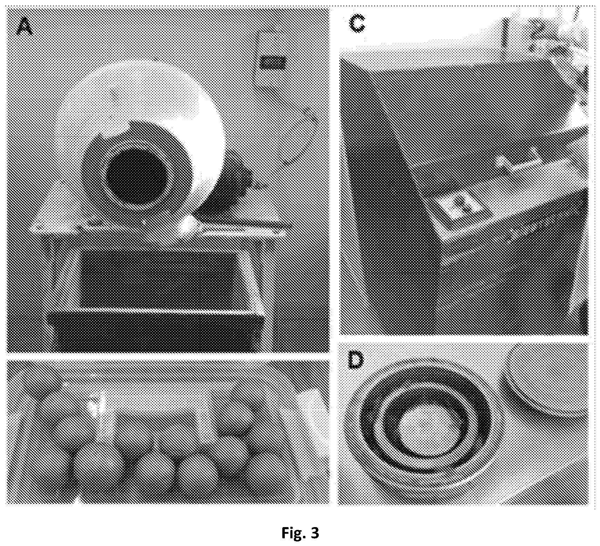

In an embodiment, of suitable vessels of one solid dense puck and one ring used as grinding media and their manufacturers include GyralGrinder^{®} Puck And Ring Grinding Vessels from Chemplex Industries, Inc., USA; GRINDING SETS from FRITSCH, Germany; GRINDING bowl from SIEBTECHNIK, Geldern, Germany (see fig 3D).

An embodiment includes the continuous operation mill guaranteeing the non-heating of the sample for a period of time. Time and amount of sample will depend of the capacity of the vibratory mill to be used.

Combination disruption methods may prove useful for organisms more resistant to disruption, where mechanical disintegration alone may be costly [7]. Algal cell walls contain, among other compounds, cellulose and phospholipids. Phospholipids are also present in the membranes of some organelles, particularly the lipid globule of some algae. The desired reactions were the conversion of part of the cell wall cellulose to glucose and partial conversion of membrane phospholipids to fatty acids and glycerol opening the entangling structure to release the protein and other bioactive components. The degradation of cell wall polysaccharides by enzymes is a procedure frequently used for protoplast production [8].

### Brief Description of the Drawings

The following figures provide preferred embodiments for illustrating the description and should not be seen as limiting the scope of disclosure.
**Figure 1** - Microscopy images (100x) showing Ulva sp cell before (entire) and after wall disruption using ultra-turrax. **A** - Entire and dry *Ulva* sp.; **B** - Entire and hydrated *Ulva* sp.; **C** - Hydrated Ulva sp. after 1' minute of ultra-turrax action.
**Figure 2** - Microscopy images (100x) showing *Ulva* sp cell wall disruption using ultra-turrax. **A** - Hydrated *Ulva* sp. after 1 minute of ultra-turrax action; **B** - Hydrated *Ulva* sp. after 5 minutes of ultra-turrax action.
**Figure 3** - Mills tested for algae cell wall disruption: **A** - gravitational ball mill; **B** - balls used as aggressor agent; **C** - vibratory mill; **D -** Dish and rings used as aggressor agent.
**Figure 4** - Microscopy images (100x) showing *Ulva* sp cell wall disruption by physical-mechanical means. **A** - Hydrated *Ulva* sp. after 5 minutes of ultra-turrax action; **B** - Hydrated *Ulva* sp. after 10 minutes of gravitational ball mill action; **C** - Hydrated *Ulva* sp. after 5 minutes of vibratory rings mill action.
**Figure 5** - Microscopy images (100x) showing microalga cell wall before (entire) and after disruption using a vibratory rings mill. **A-** Hydrated entire *Nannochloropsis* sp; **B** - Hydrated *Nannochloropsis* sp after 5 minutes of vibratory rings mill action; **C** - Hydrated entire *Tetraselmis* sp; **D -** Hydrated *Tetraselmis* sp after 5 minutes of vibratory rings mill action.

### Detailed Description

Several tests were done at laboratory scale in order to select the best mechanical process and the best enzyme cocktail. Microscopy observation and the determination of soluble protein (Bradford method) of samples were used to verify and confirm the algae disruption.

In an embodiment, dry algae were obtained from the market and tested. The mechanical process was carried out both on dry algae and on hydrated (i.e. wet) algae, in order to simulate the fresh algae, before the drying process. For that the dry algae were soaked in distilled water for 10 minutes in order to warranty the algae hydration.

The mechanical process was carried out by applying 1 minute of ultra-turrax into the dried algae and into hydrated algae.

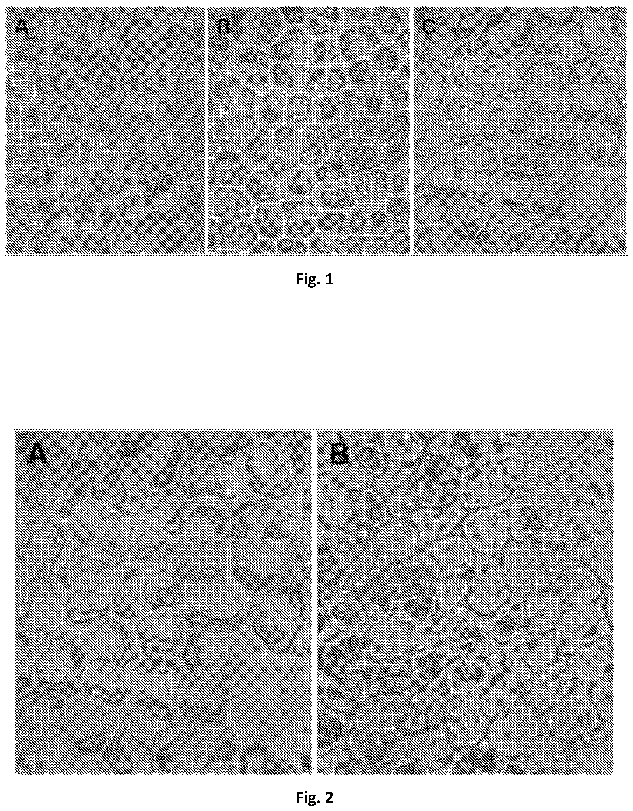

The impact of ultra-turrax action on algae disruption was evaluated over time (1-5 minutes as longer periods overheated the samples) to ascertain best duration time of action. Microscopy observation of samples was used to verify the level of algae disruption. By the observation of **Figure 2** it was concluded that the duration time of action of the mechanical process it is crucial to get protoplast with higher cell disruption.

The ultra-turrax method is still limited to laboratorial scale not being possible to obtain large quantities of processed algae needed for industrial purposes (tonnes), being an unsuitable technological method to be applied. Thus, two different mills of possible industrial use were also tested (**Figure 3**): a gravitational ball mill and; a vibratory rings mill. The results obtained are presented in **Table 1.**

**Table 1 - Soluble protein/Total Protein Available (%) obtained from Ulva sp. alga after the application of 3 different mechanical methods of disruption, in particular ultra-turrax, gravitational ball mill and vibratory rings mill, and enzymatic hydrolysis.**

| | Soluble Protein / Total Protein Available (%) |
|---|---|
| *Ulva* sp. hydrated and entire | 0.00% |
| *Ulva* sp. hydrated and after 10 minutes of gravitational ball mill action | 0.00% |
| *Ulva* sp. hydrated and after 5 minutes of ultra-turrax action | 0.46% |
| + 2h of enzymatic hydrolysis | 1.00% |
| + 3h of enzymatic hydrolysis | 1.19% |
| + 4h of enzymatic hydrolysis | 0.91% |
| *Ulva* sp. hydrated and after 5 minutes of vibratory rings mill action | 0.38% |
| + 2h of enzymatic hydrolysis | 1.14% |
| + 3h of enzymatic hydrolysis | 1.37% |
| + 4h of enzymatic hydrolysis | 1.22% |
| *Dry Ulva* sp. after 5 minutes of vibratory rings mill action | 0.00% |
| + 2h of enzymatic hydrolysis | 0.46% |
| + 3h of enzymatic hydrolysis | 0.77% |
| + 4h of enzymatic hydrolysis | 0.00% |

The results presented in **Table 1**, show that the application of gravitational ball mill was not efficient in disrupting the alga cell wall. Gravitational ball mill lack of vibration capacity to increase the impact between the sample and the balls (aggressor agent).

Furthermore, the results presented in **Table 1** also disclose that the vibratory rings mill was more efficient than the ultra-turrax when enzymatic hydrolysis is applied, which leads to an increase of soluble protein obtained. This vibratory mill also permits to process a large quantity of algae during the same 5 minutes of action, in particular, the ultra-turrax allows to process 5g of algae whereas the vibratory mill allows to process 50g of algae and can easily be adapted to industrial scale.

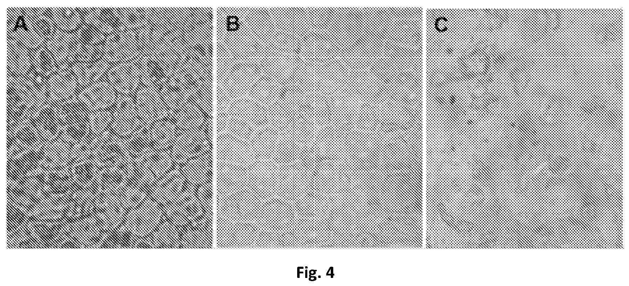

Furthermore, **Figure 4** confirms the results obtained for soluble protein, clearly showing the vibratory rings mill action that resulted in higher and almost total alga cell wall disruption.

It was observed that milling during longer periods of time, in particular 10 minutes) was inappropriate, leading to increased temperature inside the mill dish. Therefore, it was considered that dish and disk refrigeration are essential to avoid the effect of high temperature over algae which might compromise its nutritional value.

Considering the enzymatic hydrolysis, it is important to have a previous mechanical disruption of algae in order to facilitate the enzyme action. Therefore, algae were previously milled using the vibratory rings mill and then the enzyme cocktail was applied.

In an embodiment, the proposed enzyme cocktail is a low expensive mixture of lipase, pectinase, cellulase and amylase, already produced at large scale and used by a company for other purposes, and hence prone to further industrial applications. The optimal temperature for the action of the enzyme mixture is 60 °C (35 - 85 ºC) at a pH of 6.5 (5.5 - 9.5), obtained by using a citrate-phosphate buffer solution. The optimal incubation period for the enzyme action in algae was tested and fixed in 3 hours (**table 2).**

In an embodiment, the enzyme mixture was used in a concentration of 360 APSU-CB/g.

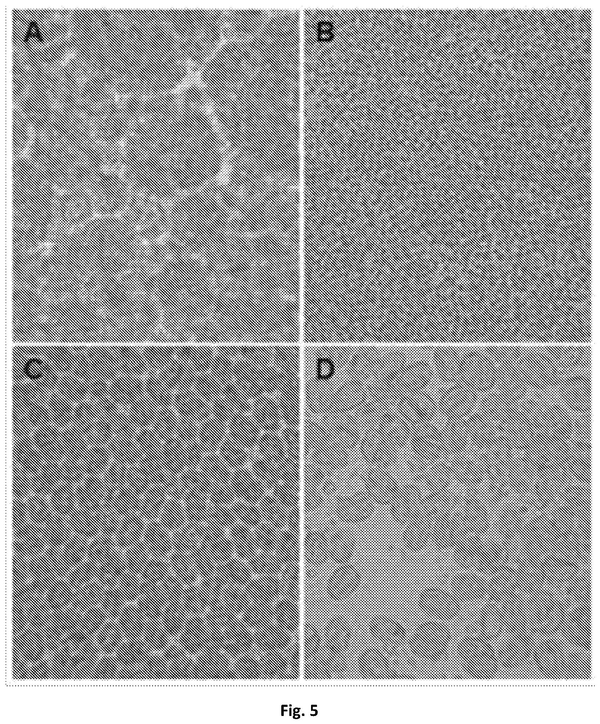

Microalgae were also used to test the effect of the vibratory rings mill and enzymatic mixture hydrolysis on the cell wall disruption and results are presented in **table 3** and **Figure 5****.**

**Table 3 - Soluble protein/Total Protein Available (%) obtained from Nannochloropsis sp. and Tetraselmis sp. algae after the application of the vibratory rings mill (as mechanical method of disruption) and enzymatic hydrolysis.**

| | Soluble Protein / Total Protein Available (%) |
|---|---|
| *Nannochloropsis* sp hydrated and entire | 0.00% |
| + 3h of enzymatic hydrolysis | 0.54% |
| *Nannochloropsis* sp hydrated and after 5 minutes of vibratory rings mill action | 2.80% |
| + 3h of enzymatic hydrolysis | 4.34% |
| *Tetraselmis* sp hydrated and entire | 0.00% |
| + 3h of enzymatic hydrolysis | 0.00% |
| *Tetraselmis* sp hydrated and after 5 minutes of vibratory rings mill action | 0.04% |
| + 3h of enzymatic hydrolysis | 0.29% |

Both disruption methods led to increased amount of the soluble protein fraction (%) and higher cell desegregation, permitting a better action of the enzymes. This processed algae biomass will hence have higher bio-availability to be used by fish when included in fish diets.

Some of these processed algae (micro and macroalgae) biomass were just included in sea bass dietary formulations as feed ingredients, replacing 30% of a commercial-based formula for this species. These diets were used to an *in vivo* digestibility trial where the capacity of sea bass to digest the algae was evaluated using a classical approach (collection of fish faeces to evaluate the amount of nutrients that were assimilated by the fish). The preliminary results of this trial showed a 14% increase in protein digestibility when *Nannochloropsis* was included in diets after the application of the vibratory rings mill; and a 36% increase in protein digestibility when the mechanical process was coupled with the enzymatic treatment. The protein digestibility of the mechanically processed *Gracilaria* also led to a 30% increase in protein digestibility by European sea bass.

The term "comprising" whenever used in this document is intended to indicate the presence of stated features, integers, steps, components, but not to preclude the presence or addition of one or more other features, integers, steps, components or groups thereof.

The following reference are given:
[1] E.W. Becker, Micro-algae as a source of protein, Biotechnology Advances 25 (2) (2007) 207-210.
[2] I. Lupatsch, C. Blake, Algae Alternative: Chlorella studied as protein source in tilapia feeds., Global Aquaculture Advocate May/june (2013) 78-79.
[3] J. Rehacek, J. Schaefer, Disintegration of microorganisms in an industrial horizontal mill of novel design, Biotechnology and Bioengineering 19 (10) (1977) 1523-1534.
[4] J. Limon-Lason, M. Hoare, C.B. Orsborn, D.J. Doyle, P. Dunnill, Reactor properties of a high-speed bead mill for microbial cell rupture, Biotechnology and Bioengineering 21 (5) (1979) 745-774.
[5] P. Dunnill, M.D. Lilly, Protein Extraction from Microbial Cells, in: S.R.a.W. Tannenbaum, D. I. C. (Ed.), Single-Cell Protein II The MIT Press, Cambridge, 1975, p. 179.
[6] H. Schütte, K.H. Kroner, H. Hustedt, M.R. Kula, Experiences with a 20 litre industrial bead mill for the disruption of microorganisms, Enzyme and Microbial Technology 5 (2) (1983) 143-148.
[7] T. Becker, J.R. Ogez, S.E. Builder, Downstream processing of proteins, Biotechnology Advances 1 (2) (1983) 247-261.
[8] H. Amano, H. Noda, Proteins of Protoplasts from Red Alga Porphyra yezoensis, NIPPON SUISAN GAKKAISHI 56 (11) (1990) 1859-1864.

## Claims

1. Method for obtaining proteins or a rich-protein extract from algae, comprising the steps of:
disrupting a cell wall of algae by physical-mechanical means using a vibratory grinding mill with rings;
submitting the disrupted algae to an enzymatic hydrolysis carried out with a mixture of enzymes;
wherein the enzyme mixture is a mixture of at least two enzymes selected from the following list: lipase, pectinase, cellulase, hemicellullase, endo exo-arabanase, amylase, or mixtures thereof;
provided that at least one of the enzymes is lipase, pectinase, amylase.

2. Method according to the previous claim, wherein the algae is microalgae or a macroalgae.

3. Method according to the previous claims, wherein the enzyme mixture is:
a pectinase, an endo exo-arabanase, a hemicellulase and a cellulase;
a cellulase and a pectinase;
a lipase, a pectinase, a cellulase and an amylase.

4. Method according to the previous claims, wherein the enzyme mixture is a cellulase and a pectinase.

5. Method according to any of the previous claims, wherein the algae are selected from *Ulva* sp., *Gracilaria* sp., *Nannochloropsis* sp., *Tetraselmis* sp., or mixtures thereof.

6. Method according to any of the previous claims, wherein the step of disrupting the cell wall by physical-mechanical means is carried out for 30 seconds - 10 minutes.

7. Method according to the previous claim, wherein the step of disrupting the cell wall by physical-mechanical means is carried out for 1 minute - 5 minutes.

8. Method according to any of the previous claims, wherein the enzymatic hydrolysis is performed at a temperature between 35 - 85 °C, in particular between 50-60 °C.

9. Method according to any of the previous claims, wherein the enzymatic hydrolysis is performed at a pH between 5.5 - 9.5, in particular between 6-7.

10. Method according to any of the previous claims, wherein the enzymatic hydrolysis is carried out for 30 minutes - 5 hours.

11. Method according to any of the previous claims, wherein the enzymatic hydrolysis is carried out for 2 hours - 4 hours.

12. Method according to any of the previous claims, wherein the enzymatic hydrolysis is carried out for 3 hours.

13. The method of any of the previous claims further comprising a step of separation or purification.

## Patentansprüche

1. Verfahren zur Gewinnung von Proteinen oder eines proteinreichen Extrakts aus Algen, umfassend die folgenden Schritte:
Aufschließen einer Zellwand von Algen durch physikalisch-mechanische Mittel unter Verwendung einer Vibrationsmühle mit Ringen;
Unterziehen der aufgeschlossenen Algen einer enzymatischen Hydrolyse mit einem Enzymgemisch;
wobei das Enzymgemisch ein Gemisch aus mindestens zwei Enzymen ist, ausgewählt aus der folgenden Liste: Lipase, Pektinase, Cellulase, Hemicellulase, endo-exo-Arabanase, Amylase oder Mischungen davon;
vorausgesetzt, dass mindestens eines der Enzyme Lipase, Pektinase, Amylase ist.

2. Verfahren nach dem vorangehenden Anspruch, wobei die Alge eine Mikroalge oder Makroalge ist.

3. Verfahren nach den vorangehenden Ansprüchen, wobei das Enzymgemisch ist:
eine Pektinase, eine endo-exo-Arabanase, eine Hemicellulase und eine Cellulase;
eine Cellulase und eine Pektinase;
eine Lipase, eine Pektinase, eine Cellulase und eine Amylase.

4. Verfahren nach den vorangehenden Ansprüchen, wobei das Enzymgemisch eine Cellulase und eine Pektinase ist.

5. Verfahren nach einem der vorangehenden Ansprüche, wobei die Algen ausgewählt werden aus *Ulva* sp., *Gracilaria* sp., *Nannochloropsis* sp., *Tetraselmis* sp., oder Mischungen davon.

6. Verfahren nach einem der vorangehenden Ansprüche, wobei der Schritt des Aufschließens der Zellwand durch physikalisch-mechanische Mittel 30 Sekunden - 10 Minuten lang durchgeführt wird.

7. Verfahren nach dem vorangehenden Anspruch, wobei der Schritt des Aufschließens der Zellwand durch physikalisch-mechanische Mittel 1 Minute - 5 Minuten lang durchgeführt wird.

8. Verfahren nach einem der vorangehenden Ansprüche, wobei die enzymatische Hydrolyse bei einer Temperatur zwischen 35 - 85 °C, insbesondere zwischen 50 - 60°C, durchgeführt wird.

9. Verfahren nach einem der vorangehenden Ansprüche, wobei die enzymatische Hydrolyse bei einem pH-Wert zwischen 5,5 - 9,5, insbesondere zwischen 6 - 7, durchgeführt wird.

10. Verfahren nach einem der vorangehenden Ansprüche, wobei die enzymatische Hydrogenolyse 30 Minuten - 5 Stunden lang durchgeführt wird.

11. Verfahren nach einem der vorangehenden Ansprüche, wobei die enzymatische Hydrogenolyse 2 Stunden - 4 Stunden lang durchgeführt wird.

12. Verfahren nach einem der vorangehenden Ansprüche, wobei die enzymatische Hydrogenolyse 3 Stunden lang durchgeführt wird.

13. Das Verfahren nach einem der vorangehenden Ansprüche, ferner umfassend einen Trennungs- oder Reinigungsschritt.

## Revendications

1. Procédé d'obtention de protéines ou d'un extrait riche en protéines à partir d'algues, comprenant les étapes consistant à :
rompre une paroi cellulaire d'algues par des moyens physiques-mécaniques à l'aide d'un vibro-broyeur à anneaux ;
soumettre les algues rompues à une hydrolyse enzymatique réalisée à l'aide d'un mélange d'enzymes ;
dans lequel le mélange d'enzymes est un mélange d'au moins deux enzymes choisies parmi la liste suivante : lipase, pectinase, cellulase, hémicellulase, endo exo-arabanase, amylase, ou des mélanges de celles-ci ;
à condition qu'au moins une des enzymes soit une lipase, pectinase, amylase.

2. Procédé selon la revendication précédente, dans lequel les algues sont des microalgues ou une macroalgue.

3. Procédé selon les revendications précédentes, dans lequel le mélange d'enzymes est :
une pectinase, une endo exo-arabanase, une hémicellulase et une cellulase ;
une cellulase et une pectinase ;
une lipase, une pectinase, une cellulase et une amylase.

4. Procédé selon les revendications précédentes, dans lequel le mélange d'enzymes est une cellulase et une pectinase.

5. Procédé selon l'une quelconque des revendications précédentes, dans lequel les algues sont choisies parmi *Ulva sp., Gracilaria sp., Nannochloropsis sp., Tetraselmis sp.,* ou des mélanges de celles-ci.

6. Procédé selon l'une quelconque des revendications précédentes, dans lequel l'étape consistant à rompre la paroi cellulaire par des moyens physiques-mécaniques est réalisée pendant 30 secondes - 10 minutes.

7. Procédé selon la revendication précédente, dans lequel l'étape consistant à rompre la paroi cellulaire par des moyens physiques-mécaniques est réalisée pendant 1 minute - 5 minutes.

8. Procédé selon l'une quelconque des revendications précédentes, dans lequel l'hydrolyse enzymatique est exécutée à une température située entre 35 - 85 °C, en particulier entre 50 - 60 °C.

9. Procédé selon l'une quelconque des revendications précédentes, dans lequel l'hydrolyse enzymatique est exécutée à un pH situé entre 5,5 - 9,5, en particulier entre 6 - 7.

10. Procédé selon l'une quelconque des revendications précédentes, dans lequel l'hydrolyse enzymatique est exécutée pendant 30 minutes - 5 heures.

11. Procédé selon l'une quelconque des revendications précédentes, dans lequel l'hydrolyse enzymatique est exécutée pendant 2 heures - 4 heures.

12. Procédé selon l'une quelconque des revendications précédentes, dans lequel l'hydrolyse enzymatique est exécutée pendant 3 heures.

13. Le procédé selon l'une quelconque des revendications précédentes comprenant également une étape de séparation ou de purification.
